# EUROPÄISCHE PATENTSCHRIFT

(11) **EP 3 972 456 B1**
(45) Veröffentlichungstag und Bekanntmachung des Hinweises auf die Patenterteilung: **11.10.2023**
(21) Anmeldenummer: 20724818.8
(22) Anmeldetag: 07.05.2020
(51) Int. Cl.: A47C 7/38

(54) **ELEKTROMOTORISCHE VERSTELLEINHEIT ZUR NEIGUNSVERSTELLUNG EINES STÜTZTEILS EINES SITZMÖBELS UND SITZMÖBEL MIT EINER ELEKTROMOTORISCHEN VERSTELLEINHEIT**
ELECTROMOTIVE ADJUSTING UNIT FOR ADJUSTING THE INCLINATION OF A SUPPORT PART OF AN ITEM OF SEATING FURNITURE COMPRISING AN ELECTOMOTIVE ADJUSTING UNIT
UNITÉ DE RÉGLAGE À MOTEUR ÉLECTRIQUE POUR RÉGLER L'INCLINAISON D'UNE PARTIE D'APPUI D'UN MEUBLE D'ASSISE, ET MEUBLE D'ASSISE COMPRENANT CETTE UNITÉ DE RÉGLAGE À MOTEUR ÉLECTRIQUE

(30) Priorität: 20.05.2019 DE 102019113392
(43) Veröffentlichungstag der Anmeldung: 30.03.2022
(73) Patentinhaber: Hettich Franke GmbH & Co. KG, 72336 Balingen-Weilstetten (DE)
(72) Erfinder: SCHLAICH, Marcel, 72351 Geislingen (DE)
(74) Vertreter: Kleine, Hubertus
(86) Internationale Anmeldenummer: PCT/EP2020/062738
(87) Internationale Veröffentlichungsnummer: WO 2020/234001

(56) Entgegenhaltungen:
- WO-A1-2013/128056
- DE-A1-102015 106 939
- DE-U1-202016 107 045
- US-A1- 2019 021 503

## Beschreibung

Die Erfindung betrifft eine elektromotorische Verstelleinheit zur Neigungsverstellung eines Stützteils eines Sitzmöbels gemäß dem Oberbegriff von Anspruch 1. Die Erfindung betrifft weiterhin ein Sitzmöbel mit einer elektromotorischen Verstelleinheit.

Sitzmöbel, insbesondere Polstersessel oder Teile eines Polstersofas, können Stützteile aufweisen, die neigungsverstellbar sind. Als Stützteile werden beispielsweise Kopfstützen oder Armlehnen verwendet, die durch ihre Neigungsverstellbarkeit einerseits eine ergonomische Einstellbarkeit des Möbels als auch andererseits eine Veränderbarkeit des Designs ermöglichen. Eine bequeme Verstellung ist über eine elektromotorische Verstelleinheit zu erreichen. Solche elektromotorischen Verstelleinheiten umfassen mindestens eine Antriebseinheit, die in der Regel als Linearantrieb ausgebildet ist und die über Schubstangen und/oder Hebel auf das Stützteil einwirkt, das über einen Schwenkbeschlag schwenkbar mit einem Korpuselement, z.B. einem Rückenteil, verbunden ist. Beispielsweise zeigt die Druckschrift DE 10 2013 200328 A1 eine derartige Verstelleinheit, bei der eine Kopfstütze von einem Schubantrieb über eine Gelenkhebelkette verschwenkt wird.

Bei diesen aus dem Stand der Technik bekannten Anordnungen muss entsprechend im Rückenteil ausreichend Platz vorhanden sein, um den Linearantrieb im Rückenteil anordnen zu können und die benötigte Anordnung von Schubstangen und/oder Hebel zum Stützteil führen zu können. Die Schubstangen bzw. Hebel müssen zudem durch den Übergangsbereich zwischen dem Korpuselement und dem Stützteil geführt werden, was zu einer erhöhten Einklemmgefahr führen kann und auch aus optischen Gesichtspunkten unvorteilhaft ist.

In der Druckschrift DE 20 2016 107 045 U1 ist eine elektromotorische Verstelleinheit zur Neigungsverstellung eines Stützteils eines Sitzmöbels beschrieben, bei der das Stützteil über Scharniere an dem Sitzmöbel schwenkbar befestigt ist, wobei die Scharniere laschenartige Halte- bzw. Schwenkarme aufweisen. Ein elektromotorischer Stellantrieb ist beabstandet von den Scharnieren im Sitzmöbel montiert und wirkt über ein Zugseil auf eines der Scharniere ein.

Ähnliche elektromotorische Verstelleinheiten sind in den Druckschriften WO 2013/128056 A1 und DE 10 2015 106 939 A1 angegeben. Hierbei wird eine Drehbewegung einer Antriebseinheit, die im Sitzmöbel angeordnet ist, über eine biegsame Welle bzw. eine umlaufende Kette auf ein Schwenkgetriebe übertragen, das zwischen dem Sitzmöbel und dem Stützteil angeordnet ist.

Die Druckschrift US 2019/0021503 A1 zeigt einen Schwenkbeschlag für eine Kopfstütze eines Sofas. Hierbei wird eine Linearbewegung eines Linearantriebs mithilfe eines rollengelagerten Bogens in eine Schwenkbewegung umgesetzt. In allen genannten Fällen ist der Antrieb entfernt von der Schwenklagerung angeordnet, was den Aufbau verkompliziert.

Aus der Druckschrift US 2015/0021969 A1 ist ein Schwenkbeschlag für eine hochschwenkbare Fußstütze eines Sessels bekannt, bei der ein Winkelgetriebe mit zwei Kegelzahnrädern genutzt wird, um den Schwenkschlag an den zur Verfügung stehenden Bauraum anzupassen. Die Kegelzahnräder sind in einem relativ massiv ausgeführten Winkelträger gelagert, was den Aufbau kostspieliger macht.

Es ist daher eine Aufgabe der vorliegenden Erfindung, eine elektromotorische Verstelleinheit zur Neigungsverstellung eines Stützteils eines Sitzmöbels zu schaffen, die möglichst einfach und kostengünstig im Aufbau ist und wobei eine Bewegungsübertragung auf das Stützteil möglichst unproblematisch erfolgt.

Diese Aufgabe wird durch eine elektromotorische Verstelleinheit mit den Merkmalen des jeweiligen unabhängigen Anspruchs gelöst. Vorteilhafte Ausgestaltungen und Weiterbildungen sind Gegenstand der abhängigen Ansprüche.

Eine elektromotorische Verstelleinheit der eingangs genannten Art weist einen Schwenkantrieb zur Befestigung an einem Korpuselement des Sitzmöbels mit einem drehbaren Abtriebselement auf, an dem eine Abtriebslasche drehfest montierbar ist, die das Stützteil trägt.

Bei der elektromotorischen Verstelleinheit ist somit anstelle eines Linearantriebs ein Schwenkantrieb vorhanden, an dessen Abtriebselement das Stützteil über eine Abtriebslasche montiert wird. Der Schwenkantrieb ist damit gleichzeitig Verstellantrieb und Schwenklager für das Stützteil, was in einem kompakten Aufbau resultiert. Zudem werden keine zusätzlichen Hebel oder dergleichen zur Übertragung der Bewegung des Antriebs benötigt.

Die Abtriebslasche kann die Form und Größe üblicher Montagelaschen von (passiven) Schwenkbeschlägen aufweisen, so dass Stützteile, die zur Befestigung an bekannten Schwenkbeschlägen ausgebildet sind, ohne Modifikation mit der anmeldungsgemäßen elektromotorischen Verstelleinheit verwendet werden können.

Bei dem Korpuselement kann es sich dabei um ein feststehendes Element des Sitzmöbels, beispielsweise ein Sitzgestell, oder auch um ein bewegliches Element, wie beispielsweise ein Rückenteil handeln, zu dem das Stützteil erfindungsgemäß in der Neigung verstellt wird.

Erfindungsgemäß weist der Schwenkantrieb eine Trägerlasche auf, mit der er an dem Korpuselement befestigbar ist und an der mindestens zwei ineinander eingreifende Zahnräder drehbar gelagert sind, die ein Untersetzungsgetriebe bilden. Die zum Verschwenken des Stützteils benötigten hohen Drehmomente am Abtriebselement lassen sich durch das Untersetzungsgetriebe erzielen. Durch Einsatz der Trägerlasche, die gleichzeitig die Zahnräder des Untersetzungsgetriebes lagert und der Befestigung am Korpuselement dient, wird ein einfacher und material- und kostensparender Aufbau erzielt. Die Befestigung am Korpuselement kann wiederum in gleicher Art und Weise ausgeführt sein wie bei den bekannten (passiven) Schwenkbeschlägen, so dass auch der Möbelkorpus für den Einsatz der elektromotorischen Verstelleinheit nicht oder nur unwesentlich modifiziert werden muss.

Weiter ist erfindungsgemäß parallel zu der Trägerlasche eine Lagerplatte angeordnet, in der die Zahnräder ebenfalls drehbar gelagert sind. Das Abtriebselement ist weiter bevorzugt an einem der Zahnräder des Schwenkantriebs angeordnet oder ausgebildet. Die Lagerung dieses (Abtriebs-) Zahnrads stellt dann vorteilhaft auch die Schwenklagerung des Stützteils dar.

Im Rahmen der Anmeldung ist unter einem Zahnrad auch ein Zahnradsegement zu verstehen, das eine Zahnung nicht vollumfänglich, sondern nur über einen bestimmten Winkelbereich aufweist. Insbesondere das Zahnrad, an dem das Abtriebselement angeordnet oder ausgebildet ist, kann als ein Zahnradsegment gestaltet sein, da der Verschwenkwinkel des Abtriebselements in der Regel weniger als 180° oder häufig sogar weniger als 90° beträgt.

In einer vorteilhaften Ausgestaltung der elektromotorischen Verstelleinheit greift das Abtriebselement formschlüssig in eine entsprechende Aufnahme der Abtriebslasche ein. Durch den Formschluss, beispielsweise erreicht durch eine Verzahnung, können die benötigten Drehmomente zwischen dem Abtriebselement und der Abtriebslasche gut und zuverlässig übertragen werden. Das Abtriebselement kann beispielsweise mit einem Außenvielzahn versehen sein, der in eine Öffnung mit einem Innenvielzahn eingesteckt wird, die an der Abtriebslasche ausgebildet ist.

In einer weiteren vorteilhaften Ausgestaltung der elektromotorischen Verstelleinheit ist ein weiterer Schwenkantrieb vorgesehen, der mit dem Schwenkantrieb über eine Synchronwelle gekoppelt ist und der ebenfalls ein drehbares Abtriebselement aufweist, an dem ebenfalls eine Abtriebslasche drehfest montierbar ist, die das Stützteil mitträgt. Bevorzugt weist auch der weitere Schwenkantrieb eine trägerlasche auf, an der mindestens zwei ineinander eingreifende Zahnräder gelagert sind, die ein Untersetzungsgetriebe bilden, wobei das Abtriebselement an einem der Zahnräder des weiteren Schwenkantriebs angeordnet oder ausgebildet ist. Über den weiteren Schwenkantrieb erfolgt somit zum einen eine Schwenklagerung des Stützteils an einer zweiten Seite und zum anderen ein synchroner Antrieb dieser zweiten Seite. Diese Ausgestaltung eignet sich damit besonders für breitere Stützteile. Bei schmaleren Stützteilen ist dagegen auch ein einseitiger Antrieb nur durch den zuerst genannten Schwenkantrieb alleine möglich.

Bevorzugt weisen bei einem beidseitigen Antrieb das Untersetzungsgetriebe des Schwenkantriebs und das Untersetzungsgetriebe des weiteren Schwenkantriebs ein gleiches Untersetzungsverhältnis auf, wobei Antriebswellen der beiden Untersetzungsgetriebe mit ein und derselben Motoreinheit gekoppelt sind. Ein gleiches Übersetzungsverhältnis lässt sich insbesondere durch im Wesentlichen gleichen Aufbau beider Getriebe erzielen, so dass vorteilhaft möglichst viele gleiche Komponenten (Zahnräder, Abtriebselement, Lagerplatte usw.) für den Schwenkantrieb und den weiteren Schwenkantrieb verwendet werden können, wodurch Herstellungs- und Lagerkosten reduziert werden.

In einer weiteren vorteilhaften Ausgestaltung der elektromotorischen Verstelleinheit weist die Motoreinheit einen Elektromotor und ein nachgeordnetes Getriebe auf. Das Getriebe der Motoreinheit kann z.B. ein Schneckengetriebe sein. Dabei kann eine Selbsthemmung vorgesehen sein, die das Stützteil zumindest bei sachgemäß von extern einwirkenden Kräften in seiner Position hält, auch wenn die Motoreinheit nicht bestromt ist.

Ein erfindungsgemäßes Sitzmöbel weist eine derartige elektromotorische Verstelleinheit auf, über die ein Stützteil verschwenkbar gelagert ist. Es ergeben sich die im Zusammenhang mit der Verstelleinheit beschriebenen Vorteile. In einer vorteilhaften Ausgestaltung ist das Stützteil ein Kopfteil, auch Kopfstütze genannt, des Sitzmöbels. Dieses ist dann gegenüber einem Rückenteil als Korpuselement verschwenkbar. Alternativ kann auch das Stützteil auch eine Armstütze, auch Armlehne genannt, sein, die dann relativ zu einem Seitenteil als Korpuselement verschwenkbar ist. Es versteht sich dabei, dass das Korpuselement selbst zusätzlich gegenüber anderen Teilen des Sitzmöbels bewegbar sein kann. Beispielsweise kann ein Rückenteil eine Neigungsverstellmöglichkeit aufweisen und seinerseits über die elektromotorische Verstelleinheit ein verschwenkbares Kopfteil tragen.

Die Erfindung wird nachfolgend anhand von Ausführungsbeispielen mit Hilfe von Figuren näher erläutert. Die Figuren zeigen:
- Fig. 1a-c: ein Abschnitt eines Sitzmöbels mit einer Verstelleinheit in einer ersten Verstellposition in verschiedenen Ansichten;
- Fig. 2a-c: das Sitzmöbel gemäß den Fig. 1a-1c in einer zweiten Verstellposition in verschiedenen Ansichten;

- Fig. 3a-3c: verschiedene isometrische Ansichten der Verstelleinheit gemäß den Fig. 1a-2c in verschiedenen Ansichten;
- Fig. 4: eine isometrische Teil-Explosionsdarstellung der Verstelleinheit gemäß den Fig. 3a-c; und
- Fig. 5: eine isometrische Gesamt-Explosionsdarstellung der Verstelleinheit gemäß den Fig. 3a-c.

In allen Figuren kennzeichnen gleiche Bezugszeichen gleiche oder gleichwirkende Elemente. Aus Gründen der Übersichtlichkeit ist in den Figuren nicht jedes Element in allen Figuren mit einem Bezugszeichen versehen.

In der Beschreibung beziehen sich Begriffe wie oben, unten, links, rechts ausschließlich auf die in den jeweiligen Figuren gewählte beispielhafte Darstellung. Lediglich die Begriffe vorne und hinten sind auf eine Ausrichtung des Sitzmöbels bezogen, wobei die vordere Seite des Sitzmöbels die dem Benutzer zugewandte Seite ist, an der sich auch eine Sitzfläche für den Benutzer befindet.

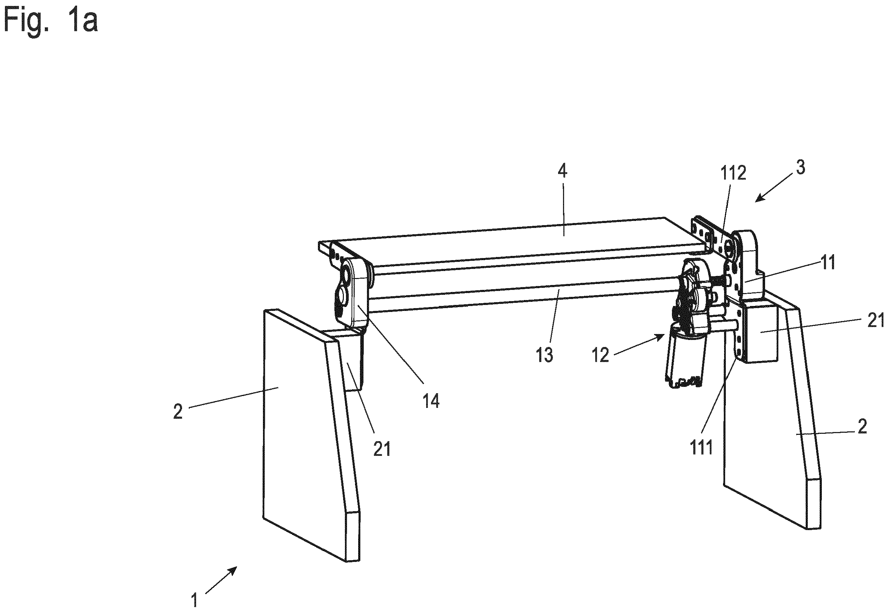

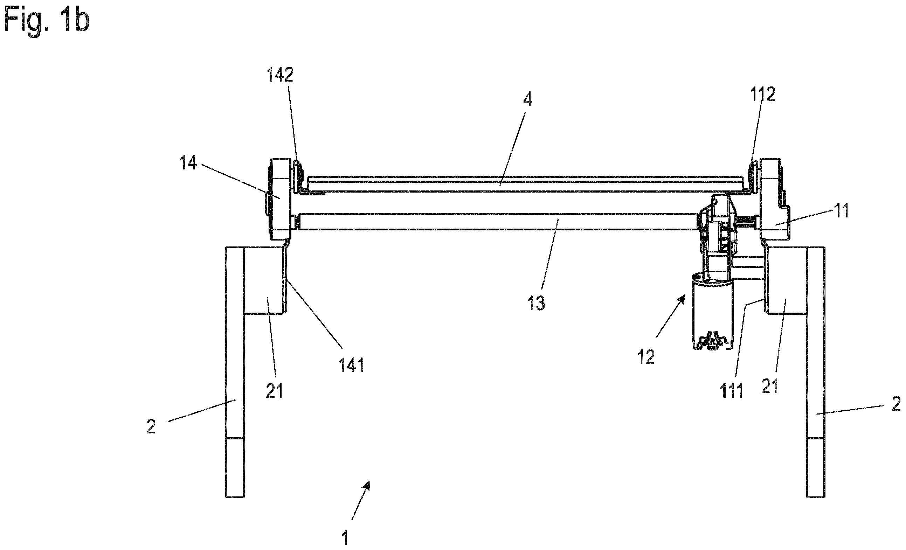

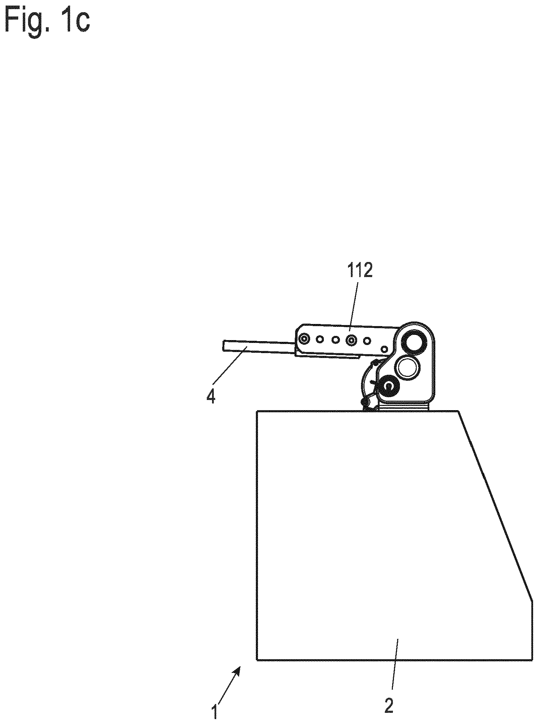

In den Fig. 1a-c ist ein Abschnitt eines Sitzmöbels 1 mit einem Rückenteil 2 und einem gegenüber diesem Rückenteil 2 verschwenkbaren Kopfteil 3, auch Kopfstütze genannt, in verschiedenen Ansichten wiedergegeben. Das Kopftteil 3 stellt somit ein verschwenkbares Stützelement des Sitzmöbels 1 dar, das an dem Rückenteil 2 als Korpuselement gelagert ist. Fig. 1a zeigt den Abschnitt des Sitzmöbels 1 in einer isometrischen Ansicht von schräg vorne, Fig. 1b zeigt eine Vorderansicht und Fig. 1c eine Seitenansicht.

In den Fig. 1a-c ist das Sitzmöbel 1 mit einem maximal nach hinten, d.h. vom Benutzer weg verschwenkten Kopfteil wiedergegeben.

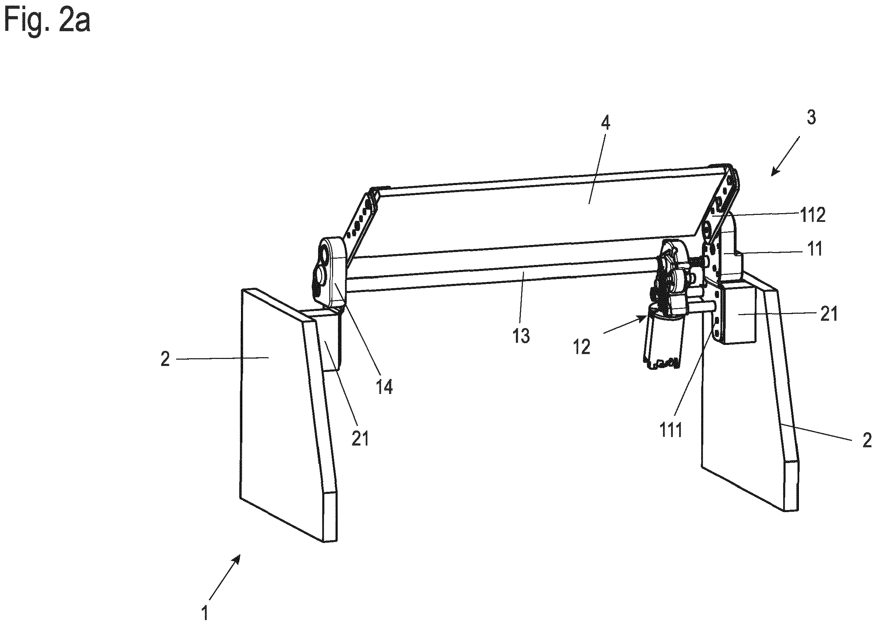

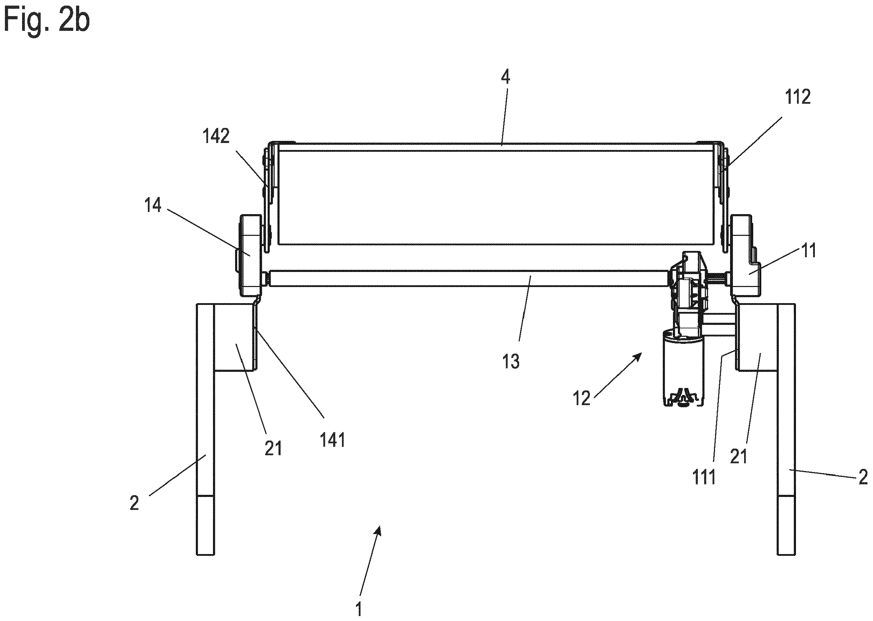

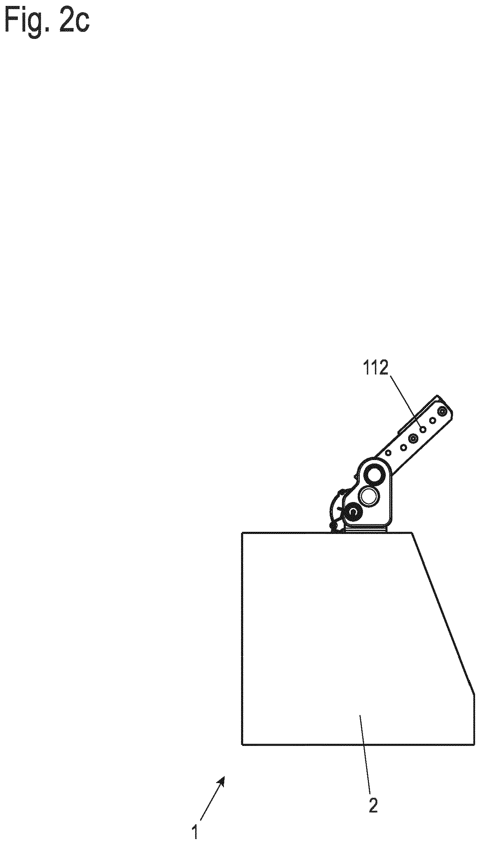

Die Fig. 2a-c geben in gleicher Art wie die Fig. 1a-c den Abschnitt des Sitzmöbels 1 wieder, wobei das Kopfteil 3 jedoch maximal nach vorne, d.h. in Richtung des Benutzers verschwenkt ist.

Ein Verschwenken des Kopfteils 3 erfolgt elektromotorisch über eine Verstelleinheit 10. Von dem Kopfteil 3 ist beispielhaft nur eine Kopfteilplatte 4 gezeigt. Auch das Rückenteil 2 ist lediglich durch miteinander verbundene Platten, die einen Rahmen des Sitzmöbels 1 bilden, wiedergegeben. Beim vollständig gefertigten Produkt sind sowohl das Rückenteil 2 als auch das Kopfteil 3 mit einer Polsterung versehen, die an den gezeigten Platten des Rückenteils 2 bzw. der Kopfteilplatte 4 befestigt ist.

Die Verstelleinheit 10 weist zwei Schwenkantriebe auf, einen Schwenkantrieb 11 auf einer Seite des Rückenteils 2 und einen weiteren Schwenkantrieb 14 auf der anderen Seite des Rückenteils 2. Beide Schwenkantriebe 11, 14 dienen der schwenkbaren Lagerung des Kopfteils 3 an dem Rückenteil 2 und verschwenken das Kopfteil 3 aktiv. Sie sind dazu mit einer Motoreinheit 12 gekoppelt, die an dem Schwenkantrieb 11 befestigt ist. Der weitere Schwenkantrieb 14 ist über eine Synchronwelle 13 mit der Motoreinheit 12 gekoppelt, so dass beide Schwenkantriebe 11, 14 beim Betrieb synchron verschwenken. Zur Befestigung werden die Schwenkantriebe 11, 14 an geeignete Flächen des Rückenteils 2 anmontiert. Bei dem gezeigten Ausführungsbeispiel sind am Rückenteil 2 Montageklötze 21 vorhanden, die geeignete Flächen zur Befestigung der Schwenkantriebe 11, 14 bereitstellen.

Bei einer alternativen Ausgestaltung der Verstelleinheit ist es auch möglich, nur die eine Seite des Kopfteils 3, auf der sich der Schwenkantrieb 11 und die Mortoreinheit 12 befindet, anzutreiben. Anstelle des weiteren Schwenkantriebs 14 ist an der anderen Seite des Kopfteils 3 dann lediglich ein (passiver) Schwenkbeschlag angeordnet. Die Synchronwelle 13 wird entsprechend nicht benötigt. Diese Ausgestaltung eignet sich insbesondere für schmale Kopfteile 3, bzw. allgemein für schmale Stützteile.

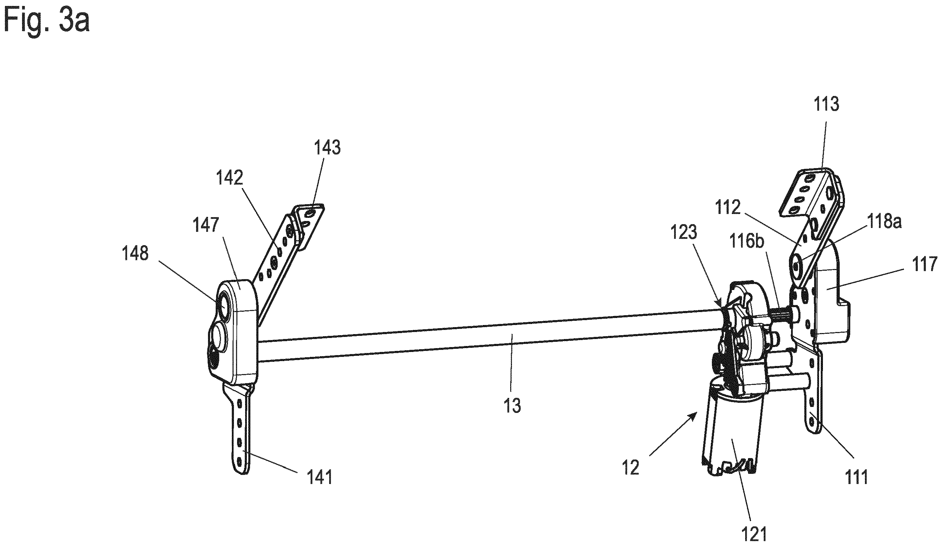

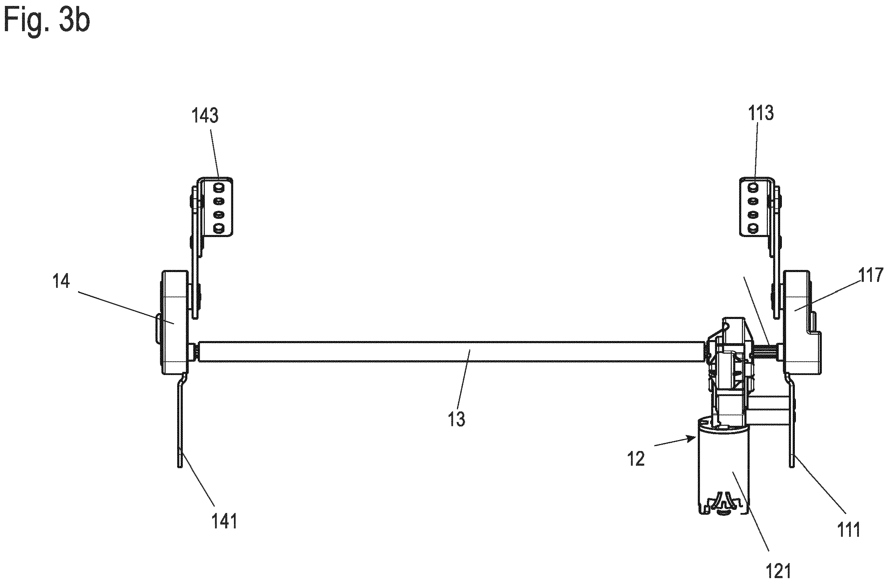

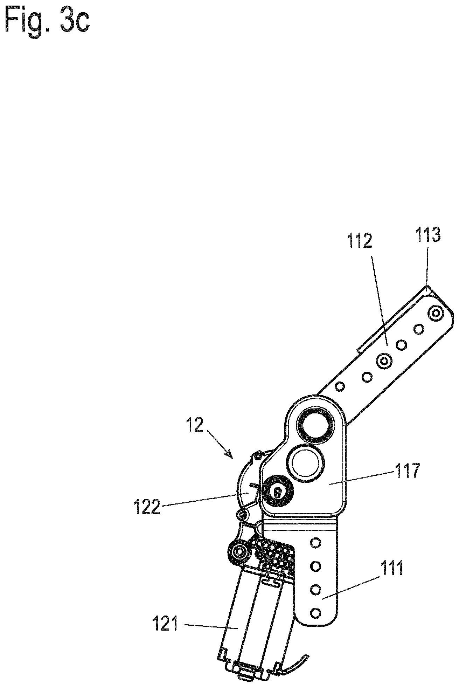

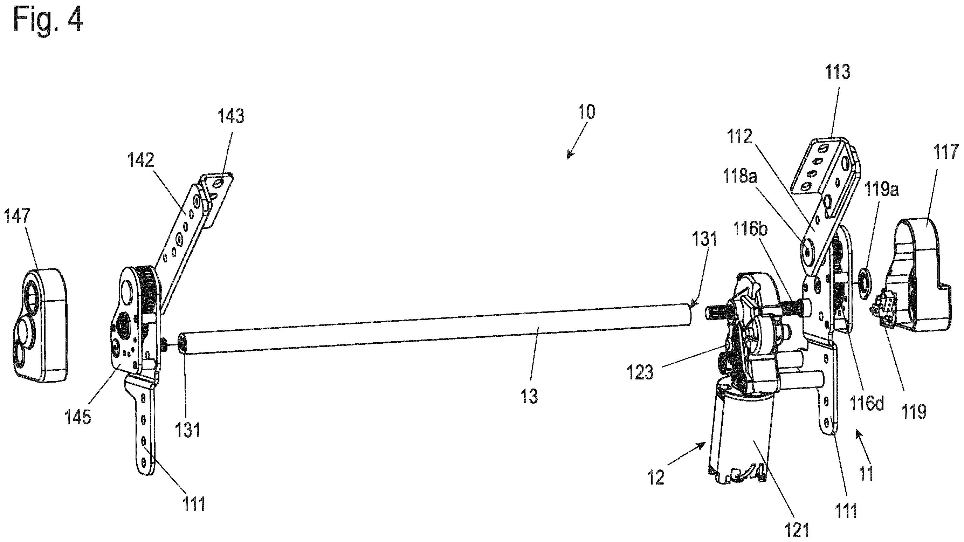

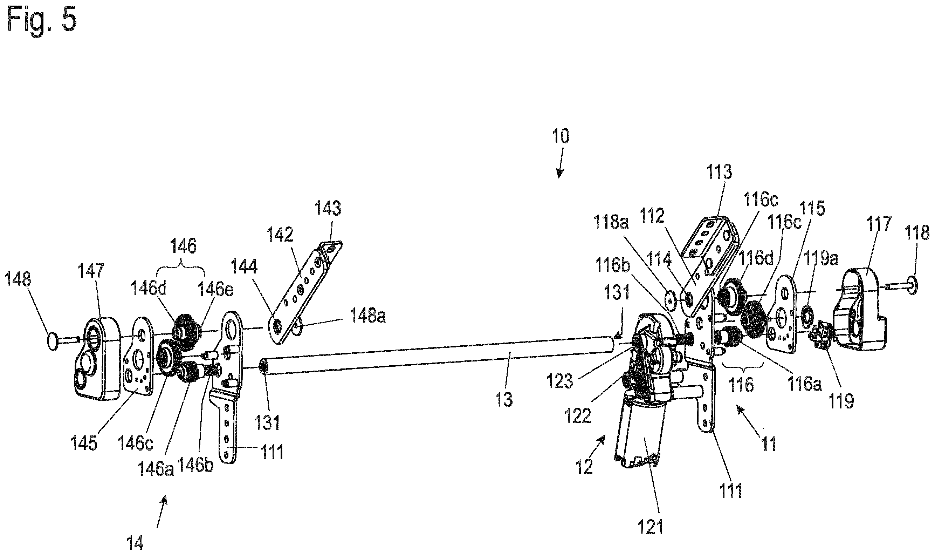

In den Fig. 3a-c ist die Verstelleinheit in gleicher Ansicht und gleichem Verschwenkwinkel dargestellt wie in den Fig. 2a-c. Die Fig. 3a-c zeigen die Verstelleinheit 10 somit vor der Verbindung mit der Kopfteilplatte 4 bzw. dem Rückenteil 2. In der Fig. 4 ist die Verstelleinheit 10 in einer isometrischen Teil-Explosionsdarstellung wiedergegeben, wobei der Betrachtungswinkel und auch der Verstellwinkel denen der Fig. 3a entsprechen. Fig. 5 zeigt die Verstelleinheit 10 aus gleichem Blickwinkel wie Fig. 4 in einer vollständigen Explosionsdarstellung. Der Aufbau der Verstelleinheit 10 wird nachfolgend mit Bezugnahme auf die Fig. 3a-3c, 4 und 5 näher erläutert.

Der Schwenkantrieb 11 bzw. der weitere Schwenkantrieb 14 der Verstelleinheit 10 weisen jeweils eine Trägerlasche 111 bzw. 141 auf, die bevorzugt in einem Stanzprozess oder einem Stanz- und Biegeprozess erstellt worden ist.

Neben Bohrungen, die zur Befestigung der des Schwenkantriebs 11 bzw. des weiteren Schwenkantriebs 14 an dem Rückenteil 2 dienen, sind an den Trägerlaschen 111 bzw. 141 Öffnungen zur Aufnahme von Achsstummeln von Zahnrädern 116 bzw. 146 ausgebildet. Die Trägerlaschen 111, 141 dienen somit auch der Lagerung der Zahnräder 116, 146. An einer gegenüberliegenden Seite der Zahnräder 116, 146 ist jeweils eine Lagerplatte 115, 145 vorgesehen, die entsprechend spiegelbildliche Bohrungen aufweist, um die Zahnräder 116, 146 an der der Trägerlasche 111, 141 gegenüberliegenden Seite zu lagern. Die Lagerplatten 115, 145 sind dabei über in den Figuren nicht näher bezeichnete Distanzelemente parallel zu den Trägerlaschen 111, 141 angeordnet und über die Distanzelemente an den Trägerlaschen 111, 141 befestigt.

Die gezeigten Zahnräder 116 bzw. 146 bilden jeweils ein untersetzendes Getriebe um die hohen zum Verschwenken des Kopfteils 3 notwendigen Drehmomente bereitzustellen. Eine Gehäuseschale 117, 147 dient jeweils der Abdeckung des so gebildeten Getriebes.

Im dargestellten Beispiel sind die Getriebe dreistufig aufgebaut und umfassen konkret jeweils ein Antriebszahnrad 116a bzw. 146a, ein Zwischenzahnrad 116c bzw. 146c und ein Abtriebszahnrad 116d bzw. 146d. Das Antriebszahnrad 116a bzw. 146a ist mit einer Antriebswelle 116b, 146b gekoppelt und das, das Abtriebszahnrad 116d bzw. 146d mit einem Abtriebselement 116e, 146e gekoppelt bzw. einstückig mit diesem gefertigt.

Angetrieben werden die Antriebszahnräder 116a, 146a von der Motoreinheit 12, die im vorliegenden Beispiel seinerseits als Getriebemotor ausgebildet ist und einen Elektromotor 121 und ein nachgeordnetes Getriebe 122 aufweist. Das Getriebe 122 kann beispielsweise ein Schneckengetriebe sein, wobei auf dem Elektromotor 121 eine Schnecke angeordnet ist, die auf ein Schneckenrad wirkt, das auf einer Abtriebshohlwelle 123 montiert ist. In die Abtriebshohlwelle 123 greift die Antriebswelle 116b des Schwenkantriebs 11 ein.

Das (Schnecken-) Getriebe 122 kann so ausgelegt sein, dass es selbsthemmend ist, so dass das Kopfteil 3 bei nicht bestromten Getriebemotor 137 auch bei externer Krafteinwirkung nicht verschwenkt. Es kann auch eine Auslegung gewählt sein, die bei moderater Krafteinwirkung bei sachgemäßer Nutzung selbsthemmend ist, aber bei übermäßig starken äußeren Kräften zu einem Verschwenken des Kopfteils 3 führt. Dadurch wird eine Beschädigung der Verstelleinheit 10 oder ihrer Befestigung am Rückenteil 2 oder dem Kopfteil 3 entgegengewirkt.

Das Abtriebselement 116e, 146e tritt durch die Trägerlaschen 111, 141 nach außen hervor und stellt einen Montagepunkt dar, an dem eine Abtriebslasche 112, 142 befestigt wird, die jeweils an die Kopfteilplatte 4 anmontiert ist. Die Abtriebslasche 112, 142 ist dazu im dargestellten Beispiel mit einem Montagewinkel 113, 143 versehen. Anstelle einzelner Abtriebslaschen 112, 142 kann auch ein u-förmiger Rundbügel vorgesehen sein, der mit beiden seiner Schenkel an den Abtriebselementen 116e und 146e befestigt wird. Auch können an sich bekannte ausfahrbare Abtriebslaschen eingesetzt werden.

Zur drehfesten Verbindung zwischen den Abtriebselementen 116e, 146e und den Abtriebslaschen 112, 142 ist in den Abtriebslaschen 112, 142 jeweils ein Innenvielzahn 114, 124 ausgebildet, in den das jeweilige Abtriebselement 116e, 146e formschlüssig eingreift. Das Abtriebselement 116e, 146e ist mit einer passenden Verzahnung versehen. Es ist jeweils eine Kombination aus Niet 118, 148 und Scheibe 118a, 148a vorgesehen, die das Abtriebselement 116e, 146e bzw. das zugehörige Abtriebszahnrad 116d, 146d auch in axialer Richtung mit dem jeweiligen Haltebügel 11, 12 verbindet. Das Abtriebselement 116e, 146e und das zugehörige Abtriebszahnrad 116d, 146d sind zu dem Zweck mit einer durchgehenden axialen Bohrung versehen. Anstelle der Kombination aus Niet 118, 148 und Scheibe 118a, 148a kann auch eine Kombination aus Schraube und (gesicherter oder selbstsichernder) Mutter eingesetzt werden.

Eine Drehung des Abtriebselements 116e, 146e relativ zu den Trägerlaschen 111, 141 führt entsprechend zu einem Verschwenken der Abtriebslaschen 112, 142 und damit der Kopfteilplatte 4 bzw. des Kopfteils 3.

Während die Antriebswelle 116b des Schwenkantriebs 11 unmittelbar in die Abtriebshohlwelle 123 der Motoreinheit 12 eingreift, ist die Antriebswelle 146b über die Synchronwelle 13 mit der durch die Abtriebshohlwelle 123 tretenden Antriebswelle 116b gekoppelt. Die Synchronwelle 13 weist entsprechende Wellenaufnahmen 131 für die drehfeste Kopplung mit den Antriebswellen 116b und 146b auf. Auf diese Weise ist sichergestellt, dass beide Schwenkantriebe 11, 14 bei Betätigung der Motoreinheit 12 synchron verfahren. Vorteilhaft werden dazu jeweils paarweise gleiche Zahnräder 116 bzw. 146 bei dem Schwenkantrieb 11 und dem weiteren Schwenkantrieb 14 eingesetzt.

In oder an dem Getriebe des Schwenkantriebs 11 ist zudem noch eine Endschalterplatte 119 angeordnet, die Endschalter aufweist, die betätigt werden, wenn die Abtriebslasche 112 eine der beiden Endstellungen, die auch in den Fig. 1a-c bzw. 2a-c dargestellt sind, erreicht. Zum Betätigen der Endschalter der Endschalterplatte 119 können an einem der Zahnräder 116 an geeigneten Positionen Nocken angeordnet sein.

In den Ausführungsbeispielen ist die Verstelleinheit 10 beispielhaft im Zusammenhang mit dem Kopftteil 3, das relativ zu dem Rückenteil 2 verschwenkbar ist, dargestellt. Die Verstelleinheit 10 kann ebenso zur Verstellung eines sonstigen Stützteils eines Sitzmöbels eingesetzt werden, beispielsweise einer Armlehne. In dem Fall ist ein Seitenteil des Sitzmöbels das Korpuselement, gegenüber dem die Armlehne verschwenkt wird.

### Bezugszeichen

- 1: Sitzmöbel
- 2: Rückenteil
- 21: Montageklotz
- 3: Kopfteil
- 4: Kopfteilplatte

- 10: Verstelleinheit
- 11: Schwenkantrieb
- 12: Motoreinheit
- 13: Synchronwelle
- 131: Wellenaufnahme
- 14: weiterer Schwenkantrieb

- 111, 141: Trägerlasche
- 112, 142: Abtriebslasche
- 113, 143: Montagewinkel
- 114, 144: Innenvielzahn
- 115, 145: Lagerplatte
- 116, 146: Zahnräder
- 116a, 146a: Antriebszahnrad
- 116b, 146b: Antriebswelle
- 116c, 146c: Zwischenzahnrad
- 116d, 146d: Abtriebszahnrad
- 116e, 146e: Abtriebselement
- 117, 147: Gehäuseschale
- 118, 148: Niet
- 118a, 148a: Scheibe
- 119: Endschalterplatte

- 121: Elektromotor
- 122: Getriebe
- 123: Abtriebshohlwelle

## Patentansprüche

1. Elektromotorische Verstelleinheit (10) zur Neigungsverstellung eines Stützteils eines Sitzmöbels (1), aufweisend mindestens einen Schwenkantrieb (11) zur Befestigung an einem Korpuselement des Sitzmöbels (1) mit einem drehbaren Abtriebselement (116a), an dem eine Abtriebslasche (112) drehfest montierbar ist, um das Stützteil zu tragen, wobei der Schwenkantrieb (11) eine Trägerlasche (111) aufweist, mit der er an dem Korpuselement befestigbar ist und an der mindestens zwei ineinander eingreifende Zahnräder (116) drehbar gelagert sind, die ein Untersetzungsgetriebe bilden, **dadurch gekennzeichnet, dass**
parallel zu der Trägerlasche (111) eine Lagerplatte (115) angeordnet ist, in der die Zahnräder (116) ebenfalls drehbar gelagert sind.

2. Elektromotorische Verstelleinheit (10) nach Anspruch 1, bei der das Abtriebselement (116a) formschlüssig in eine entsprechende Aufnahme der Abtriebslasche (112) eingreift.

3. Elektromotorische Verstelleinheit (10) nach Anspruch 1 oder 2, bei der das Abtriebselement (116e) an einem der Zahnräder (116) des Schwenkantriebs (11) angeordnet oder ausgebildet ist.

4. Elektromotorische Verstelleinheit (10) nach einem der Ansprüche 1 bis 3, bei der ein weiterer Schwenkantrieb (14) vorgesehen ist, der mit dem Schwenkantrieb (11) über eine Synchronwelle (13) gekoppelt ist und der ebenfalls ein drehbares Abtriebselement (146e) aufweist, an dem ebenfalls eine Abtriebslasche (142) drehfest montierbar ist, die das Stützteil mitträgt.

5. Elektromotorische Verstelleinheit (10) nach Anspruch 4, bei der der weiterer Schwenkantrieb (14) ebenfalls eine Trägerlasche (141) aufweist, an der mindestens zwei ineinander eingreifende Zahnräder (146) drehbar gelagert sind, die ein Untersetzungsgetriebe bilden, wobei das Abtriebselement (146e) an einem der Zahnräder (146) des weiteren Schwenkantriebs (11) angeordnet oder ausgebildet ist.

6. Elektromotorische Verstelleinheit (10) nach Anspruch 5, bei der das Untersetzungsgetriebe des Schwenkantriebs (11) und das Untersetzungsgetriebe des weiteren Schwenkantriebs (14) ein gleiches Untersetzungsverhältnis aufweisen und wobei Antriebswellen (116b, 146b) der beiden Untersetzungsgetriebe mit ein und der derselben Motoreinheit (12) gekoppelt sind.

7. Elektromotorische Verstelleinheit (10) nach Anspruch 6, bei der die Motoreinheit (12) einen Elektromotor (12) und ein nachgeordnetes Getriebe aufweist.

8. Elektromotorische Verstelleinheit (10) nach Anspruch 7, bei der das Getriebe der Motoreinheit (12) ein Schneckengetriebe ist.

9. Sitzmöbel (1), aufweisend eine elektromotorische Verstelleinheit (10) nach einem der Ansprüche 1 bis 8, über die ein Stützteil verschwenkbar gelagert ist.

10. Sitzmöbel nach Anspruch 9, bei dem das verschwenkbar gelagerte Stützteil ein Kopfteil (3) des Sitzmöbels (1) ist, das gegenüber einem Rückenteil (2) verschwenkbar ist.

## Claims

1. Electromotive adjusting unit (10) for adjusting the inclination of a support part of an item of seating furniture (1), comprising at least one pivot drive (11) for fastening to a body element of the item of seating furniture (1) with a rotatable output element (116a) on which an output plate (112) can be mounted in a rotationally fixed manner, in order to carry the support part, wherein the pivot drive (11) has a carrier plate (111) by means of which it can be fastened to the body element and on which at least two intermeshing gearwheels (116) are rotatably mounted, which form a reduction gear, **characterized in that** a bearing plate (115) is arranged parallel to the carrier plate (111), in which the gearwheels (116) are also rotatably mounted.

2. Electromotive adjusting unit (10) according to claim 1, in which the output element (116a) positively engages a corresponding receptacle of the output plate (112).

3. Electromotive adjusting unit (10) according to claim 1 or 2, in which the output element (116e) is arranged or formed on one of the gearwheels (116) of the pivot drive (11).

4. Electromotive adjusting unit (10) according to one of claims 1 to 3, in which a further pivot drive (14) is provided which is coupled to the pivot drive (11) via a synchronous shaft (13) and which likewise has a rotatable output element (146e) on which an output plate (142) can likewise be mounted in a rotationally fixed manner, which also carries the support part.

5. Electromotive adjusting unit (10) according to claim 4, in which the further pivot drive (14) also has a carrier plate (141) on which at least two intermeshing gearwheels (146) are rotatably mounted, which form a reduction gear, wherein the output element (146e) is arranged or formed on one of the gearwheels (146) of the further pivot drive (11).

6. Electromotive adjusting unit (10) according to claim 5, in which the reduction gear of the pivot drive (11) and the reduction gear of the further pivot drive (14) have the same reduction ratio, and wherein drive shafts (116b, 146b) of the two reduction gears are coupled to one and the same motor unit (12).

7. Electromotive adjusting unit (10) according to claim 6, in which the motor unit (12) comprises an electric motor (12) and a downstream gear.

8. Electromotive adjusting unit (10) according to claim 7, in which the transmission of the motor unit (12) is a worm gear.

9. Seating furniture (1), comprising an electromotive adjusting unit (10) according to one of claims 1 to 8, via which a support part is pivotably mounted.

10. Seating furniture according to claim 9, in which the pivotally mounted support part is a head part (3) of the seating furniture (1) which is pivotable relative to a back part (2).

## Revendications

1. Unité de réglage (10) à moteur électrique pour régler l'inclinaison d'une partie d'appui d'un meuble d'assise (1), présentant au moins un mécanisme de pivotement (11) pour assurer la liaison avec un élément corps du meuble d'assise (1), comprenant un élément de sortie (116a) rotatif sur lequel peut être fixée de manière solidaire en rotation une bride de sortie (112), pour porter la partie d'appui, le mécanisme de pivotement (11) présentant une patte de support (111) avec laquelle il peut être fixé à l'élément de corps et sur laquelle sont logées au moins deux roues dentées (116) s'engrenant l'une dans l'autre, qui forment un engrenage réducteur, **caractérisée en ce que**
une plaque d'appui (115) est disposée parallèlement à la patte de support (111), dans laquelle les roues dentées (116) sont également logées de manière rotative.

2. Unité de réglage à moteur électrique (10) selon la revendication 1, dans laquelle l'élément de sortie (116a) s'engage par complémentarité de forme dans un logement correspondant de la bride de sortie (112).

3. Unité de réglage à moteur électrique (10) selon la revendication 1 ou 2, dans laquelle l'élément de sortie (116e) est disposé ou formé sur l'une des roues dentées (116) du mécanisme de pivotement (11).

4. Unité de réglage à moteur électrique (10) selon l'une des revendications 1 à 3, dans laquelle il est prévu un autre mécanisme de pivotement (14) qui est couplé au mécanisme de pivotement (11) par l'intermédiaire d'un arbre de synchronisation (13) et qui comporte également un élément de sortie rotatif (146e) sur lequel peut également être montée solidaire en rotation une bride de sortie (142) qui porte conjointement la partie d'appui.

5. Unité de réglage à moteur électrique (10) selon la revendication 4, dans laquelle l'autre mécanisme de pivotement (14) présente également une patte de support (141) sur laquelle sont montées au moins deux roues dentées (146) s'engrenant l'une dans l'autre, qui forment un réducteur, l'élément de sortie (146e) étant disposé ou formé sur l'une des roues dentées (146) du mécanisme de pivotement (11).

6. Unité de réglage à moteur électrique (10) selon la revendication 5, dans laquelle le réducteur du mécanisme de pivotement (11) et le réducteur de l'autre mécanisme de pivotement (14) présentent un rapport de réduction identique et dans laquelle des arbres d'entraînement (116b, 146b) des deux réducteurs sont couplés à une seule et même unité de moteur (12).

7. Unité de réglage à moteur électrique (10) selon la revendication 6, dans laquelle l'unité de moteur (12) comprend un moteur électrique (12) et un engrenage en aval.

8. Unité de réglage à moteur électrique (10) selon la revendication 7, dans laquelle l'engrenage de l'unité de moteur (12) est un engrenage à vis sans fin.

9. Meuble d'assise (1), présentant une unité de réglage à moteur électrique (10) selon l'une des revendications 1 à 8, par l'intermédiaire de laquelle une partie d'appui est montée pivotante.

10. Meuble d'assise selon la revendication 9, dans lequel la partie d'appui montée pivotante est une partie de tête (3) du siège (1), qui peut pivoter par rapport à une partie de dossier (2).
